# FASCICULE DE BREVET EUROPEEN

(11) **EP 3 626 591 B1**
(45) Date de publication et mention de la délivrance du brevet: **28.07.2021**
(21) Numéro de dépôt: 19197318.9
(22) Date de dépôt: 13.09.2019
(51) Int. Cl.: B62D 65/02, B62D 65/16, B60R 19/18, B60R 19/24

(54) **PROCEDE DE FIXATION D'UN BOUCLIER ARRIERE DE VEHICULE SUR UNE TRAVERSE ARRIERE**
BEFESTIGUNGSVERFAHREN EINES HINTEREN STOSSFÄNGERS EINES FAHRZEUGS AUF EINEM HINTERACHSTRÄGER
METHOD FOR ATTACHING A REAR VEHICLE SHIELD ON A REAR CROSSMEMBER

(30) Priorité: 21.09.2018 FR 1858589
(43) Date de publication de la demande: 25.03.2020
(73) Titulaire: RENAULT s.a.s., 92100 Boulogne-Billancourt (FR)
(72) Inventeur: DO NASCIMENTO, SILVINO, BOIS D'ARCY (FR); FERIN, JULIEN, 78180 MONTIGNY LE BRETONNEUX (FR)

(56) Documents cités:
- GB-A- 2 265 583
- JP-A- H0 342 351
- JP-A- 2004 217 018

## Description

L'invention se rapporte à un procédé de fixation d'un bouclier arrière de véhicule sur une traverse arrière.

Sur certains véhicules, la fixation du bouclier arrière sur une traverse arrière, s'effectue par le biais de deux pièces support qui sont préalablement montées sur ladite traverse arrière. Ces deux pièces support sont généralement placées aux deux extrémités de la traverse arrière, considérées le long d'un axe longitudinal de ladite traverse. Les documents GB 2 265 583 A, JP 2004 217018 A et JP H03 42351 A sont des illustrations de fixation d'un bouclier sur une traverse par l'intermédiaire de pièces support.

Or, il est important de faciliter la mise en référence des ces deux pièces support sur la traverse, le long d'une chaine d'assemblage d'un véhicule, afin de gagner du temps et d'assurer un montage précis et reproductible du bouclier arrière sur la traverse.

Un procédé de fixation selon l'invention permet de répondre à ces deux critères.

L'invention a pour objet un procédé de fixation d'un bouclier arrière sur une traverse arrière d'un véhicule au moyen de deux pièces support.

Selon l'invention, le procédé comprend les étapes suivantes :
- Une étape de mise en référence de chaque pièce support sur la traverse, au moyen de l'insertion d'une patte de fixation repliée de la pièce support autour d'un bord d'extrémité de la traverse, puis d'un pivotement de ladite pièce autour de ladite patte repliée jusqu'à ce qu'au moins un pion de la pièce support vienne se loger dans au moins un orifice de la traverse,
- Une étape de fixation des deux pièces support à la traverse,
- Une étape de fixation du bouclier à la traverse par l'intermédiaire des deux pièces support.

Grâce à la présence combinée d'une patte de fixation et d'un pion, chaque pièce support est directement bien référencée sur la traverse, en ne pouvant être positionnée que d'une seule façon sur ladite traverse. Chaque pièce support est ainsi enfilée autour d'une extrémité de la traverse par l'intermédiaire de la patte de fixation, puis est ensuite mise en rotation jusqu'à venir au contact de ladite traverse par l'introduction du pion dans l'orifice. De cette manière, les deux pièces support sont placées aux deux extrémités de la traverse considérée suivant un axe longitudinal de ladite traverse. Préférentiellement, une fois que les deux pièces support ont été référencées sur la traverse, elles ne débordent pas de ladite traverse, et n'augmentent donc pas la longueur de celle-ci. Le mouvement de chaque pièce support pour être référencée sur la traverse est naturel, ne nécessitant aucune manipulation compliquée et hasardeuse. Il est supposé que le pion une fois logé dans l'orifice de la traverse, maintient la pièce support contre la traverse. Ce pion est assimilable à un clip. L'étape de mise en référence de la pièce support sur la traverse n'assure pas une liaison suffisamment solide de ladite pièce sur ladite traverse, si bien qu'il est nécessaire de fixer cette pièce support sur la traverse. Cette étape de fixation s'effectue sans avoir à déplacer la pièce support déjà référencée. Le pion a une fonction de maintien de la pièce support contre la traverse mais n'a pas vocation à assurer une fixation solide ladite pièce support à ladite traverse.

Selon une caractéristique possible de l'invention, la traverse arrière s'étend selon un axe transversal du véhicule et présente deux extrémités le long dudit axe, la patte de fixation repliée étant située à une extrémité de la pièce support, de manière à ce que lors de l'étape de mise en référence ladite patte repliée est insérée autour du bord d'extrémité de la traverse en plaçant ladite pièce support sous la traverse. Lors de l'étape de mise en référence de la pièce support sur la traverse, ladite pièce support ne déborde jamais de la traverse, si bien qu'il n'est pas nécessaire d'avoir un espace de dégagement autour de la traverse pour assurer cette étape de mise en référence.

Selon une caractéristique possible de l'invention, l'orifice est placé sur une face inférieure de la traverse et le pion est implanté sur une face supérieure de la pièce support, le pivotement de la pièce support lors de l'étape de mise en référence s'effectuant vers le haut dans un plan transversal et vertical du véhicule. De cette manière, l'axe de rotation fictif de la pièce support s'étend selon un axe longitudinal du véhicule et dans une direction sensiblement horizontale. Pour cette configuration, la pièce support est suspendue à la traverse, et le pion permet le maintien de ladite pièce support contre ladite traverse.

Selon une caractéristique possible de l'invention, lors de l'étape de mise en référence, le pion pénètre dans l'orifice avec un certain effort. En effet, l'insertion du pion dans l'orifice s'effectue en engendrant une déformation élastique, soit dudit pion, soit d'une paroi de la traverse délimitant l'orifice, permettant au pion d'assurer une fonction de maintien de la pièce support contre la traverse.

Selon une caractéristique possible, le pion et l'orifice présentent des caractéristiques structurelles permettant audit pion d'être bloqué dans ledit orifice lors de l'étape de mise en référence, permettant à la pièce support de demeurer au contact de la traverse. Ces caractéristiques structurelles peuvent être constituées par tout moyen permettant d'empêcher un retrait facile et sans effort de la pièce support de la traverse. Avantageusement, le retrait de la pièce support juste après l'étape de mise en référence, s'effectue au prix d'un certain effort, avec ou sans outil.

Selon une caractéristique possible de l'invention, chaque pièce support après avoir été mise en référence sur la traverse est fixée à celle-ci au moyen de vis.

L'invention a pour autre objet un véhicule comprenant une traverse arrière, deux pièces support et un bouclier arrière.

Selon l'invention, le bouclier arrière est fixé à la traverse arrière au moyen d'un procédé conforme à l'invention.

L'invention a pour autre objet une pièce support pour la fixation d'un bouclier arrière sur une traverse arrière d'un véhicule à partir d'un procédé conforme à l'invention.

Selon l'invention, la pièce support comprend un corps allongé présentant une face supérieure allongée, et deux extensions perpendiculaires audit corps, ladite pièce comprenant en outre une patte de fixation repliée située à une extrémité de la face supérieure considérée le long de son axe longitudinal, et un pion implanté dans ladite face supérieure. Préférentiellement la patte de fixation est repliée autour d'un axe qui est perpendiculaire à l'axe d'émergence du pion. De façon avantageuse, le pion est de forme cylindrique ou tronconique, et l'axe d'émergence correspond à l'axe de révolution dudit pion.

Selon une caractéristique possible de l'invention, la face supérieure comprend au moins deux trous placés le long de ladite face supérieure et destinés à recevoir une vis pour la fixation de ladite pièce à une traverse arrière de véhicule.

Selon une caractéristique possible de l'invention, le pion a une forme tronconique et émerge de la paroi supérieure, de sorte que sa section transversale soit maximale du côté de la paroi supérieure et diminue progressivement en s'éloignant de ladite paroi.

On donne ci-après une description détaillée d'un mode de réalisation préféré d'un procédé de de fixation selon l'invention, en se référant aux figures suivantes :
- La figure 1 est une vue en perspective du dessous d'une zone arrière d'un véhicule selon l'invention depuis l'intérieur du bouclier,
- Les figures 2A, 2B et 2C sont trois vues en perspective du dessous d'une zone arrière d'un véhicule selon l'invention depuis l'extérieur du bouclier, respectivement au début, au milieu et en fin de mise en référence d'une pièce support sur une traverse arrière du véhicule,
- La figure 3 est une vue en coupe d'un pion d'une pièce support selon l'invention,
- La figure 4 est une vue en perspective du dessous d'une zone arrière d'un véhicule selon l'invention, depuis l'extérieur du bouclier,
- La figure 5 une vue de face d'une zone arrière d'un véhicule selon l'invention depuis l'intérieur du bouclier

La description détaillée qui va suivre s'effectue à partir d'un repère XYZ classiquement utilisé en conception automobile, dans lequel X est la direction avant arrière, dirigé vers l'arrière, Y est la direction transversale dirigée vers la droite et Z est la direction verticale dirigé vers le haut.

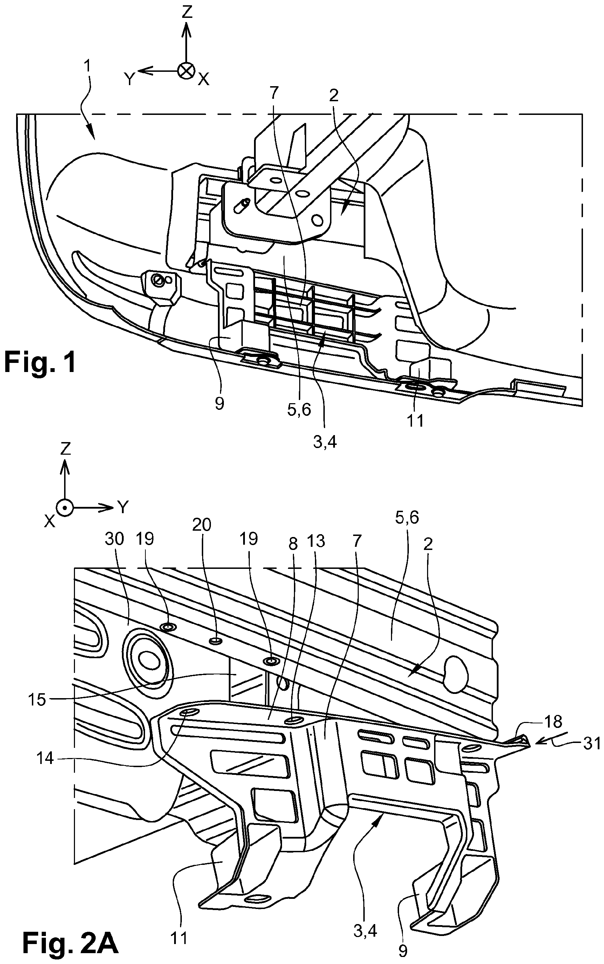

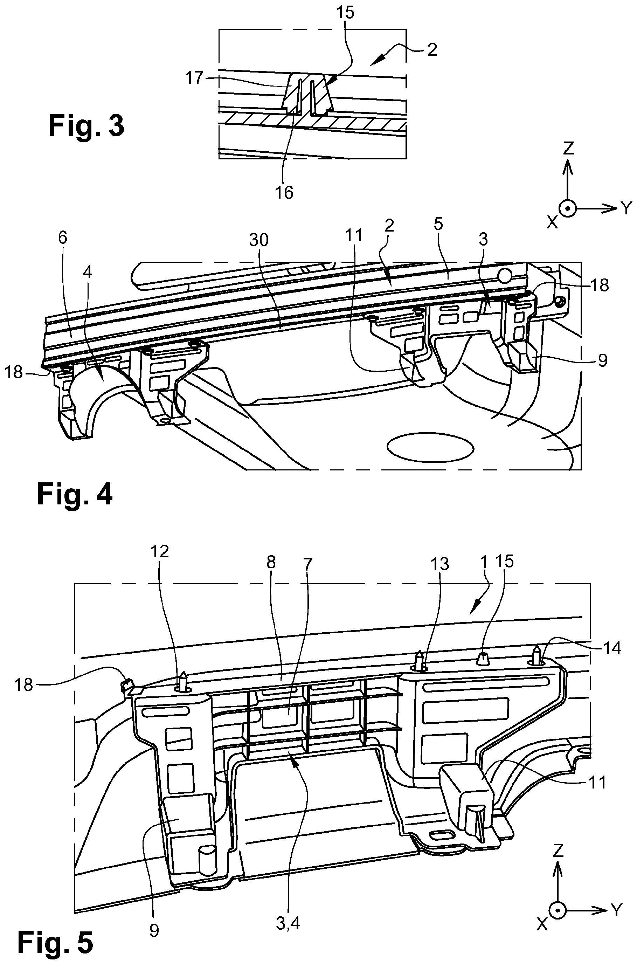

En se référant aux figures 1 et 4, un bouclier arrière 1 d'un véhicule selon l'invention, est fixé à une traverse arrière 2 dudit véhicule par l'intermédiaire de deux pièces support 3, 4 venant préalablement se fixer à ladite traverse arrière 2. La traverse arrière 2 et le bouclier arrière 1 sont deux pièces qui s'étendent selon un axe transversal Y du véhicule dans une direction sensiblement horizontal lorsque le véhicule est placé sur un sol horizontal.

En se référant à la figure 4, les deux pièces support 3, 4 sont fixées aux deux extrémités 5, 6 de la traverse 2 considérées le long d'un axe longitudinal de ladite traverse 2, en ne débordant pas de la traverse 2. Autrement dit, ces deux pièces support 3, 4 sont incluses dans la traverse 2 sans augmenter la longueur de celle-ci.

En se référant aux figures 1, 2A, 2B, 2C, 4 et 5 les deux pièces supports 3, 4 sont identiques et présentent chacune schématiquement un corps principal allongé 7 possédant une face supérieure 8 allongée, et deux extensions 9, 11 parallèles s'étendant perpendiculairement audit corps allongé 7. La face supérieure 8 comporte trois ouvertures 12, 13, 14 réparties de façon homogène le long de ladite face supérieure 8, lesdites ouvertures 12, 13, 14 étant circulaires et destinées à recevoir chacune une vis de fixation pour arrimer la pièce support 3, 4 à la traverse arrière 2.

En se référant aux figures 3 et 5, un pion 15 est implanté dans la face supérieure 8 de la pièce support 3, 4 entre deux ouvertures 13, 14. Ce pion 15 présente un corps cylindrique 16 prolongé par une tête tronconique 17 présentant une base circulaire élargie, dont le diamètre est supérieur à celui du corps cylindrique 16. Cette base circulaire élargie forme avec le corps cylindrique 16 un épaulement, la section transversale circulaire de la tête tronconique 17 diminuant progressivement depuis la base élargie en s'éloignant dudit corps cylindrique 16. La plus petite section transversale circulaire de la tête élargie 17 est sensiblement égale à la section transversale du corps cylindrique 16.

Chaque pièce support 3, 4 possède au niveau d'une extrémité de la face supérieure 8 du corps principal 7 considérée le long d'un axe longitudinal de ladite face 8, une patte de fixation 18 qui est repliée autour d'un axe, qui est sensiblement perpendiculaire à un axe longitudinal de ladite face supérieure allongée 8. Le pion 15 est située à proximité de l'autre extrémité de la face supérieure 8, considérée selon un axe longitudinal de ladite face 8. Le pion 15 est implanté sur la face supérieure 8 par l'intermédiaire de son corps cylindrique 16, de sorte que la tête tronconique 17 émerge de ladite face 8. Autrement dit, le corps cylindrique 16 du pion 15 est compris entre la tête tronconique 17 et la face supérieure 8.

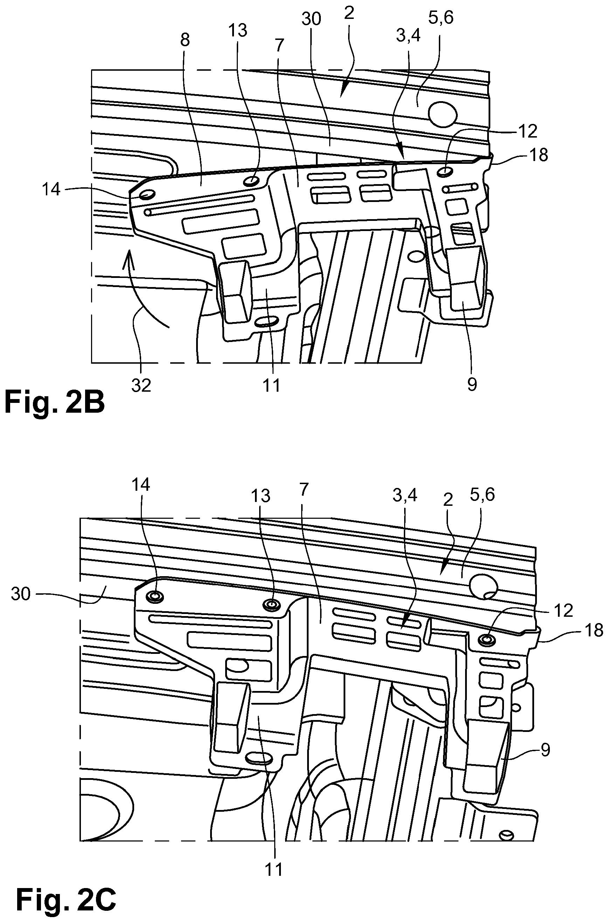

En se référant aux figures 2A, 2B et 4 la traverse arrière 2 présente une face inférieure 30 plane s'étendant selon un axe transversal Y du véhicule, et dans une direction sensiblement horizontale lorsque le véhicule est sur un sol horizontal. Cette face inférieure 30 possède des trous 19 destinés à recevoir chacun une vis de fixation de la pièce support 3, 4 sur la traverse 2, ainsi qu'un orifice profilé 20 destiné à recevoir le pion 15 de ladite pièce support 3, 4.

Un procédé de fixation du bouclier arrière 1 sur la traverse arrière 2 par l'intermédiaire des deux pièces support 3, 4, comprend les étapes suivantes :
- Une étape de mise en référence de chaque pièce support 3, 4 sur la traverse 2, comprenant :
   - Une étape d'insertion de la patte de fixation repliée 18 autour d'un bord d'extrémité de la traverse 2 dans le sens indiqué par la flèche 31 de la figure 2A. Lors de cette étape d'insertion, la pièce support 3, 4 est placé au droit et en-dessous de la traverse 2,
   - Une étape de pivotement de ladite pièce 3, 4 autour de la patte repliée 18 dans le sens indiqué par la flèche 32 de la figure 2B. Ce pivotement s'effectue autour d'un axe de rotation longitudinal X et horizontal, de sorte que durant cette phase de pivotement la pièce support 3, 4 se déplace dans un plan YZ transversal et vertical du véhicule,
   - Une étape de poursuite dudit pivotement jusqu'à ce que le pion 15 vienne se loger dans l'orifice profilé 20 de la traverse 2. Lorsque le pion 15 est inséré dans l'orifice profilé 20 de la traverse 2, la face supérieure 8 de la pièce support est au contact de la face inférieure 30 de la traverse 2. Une fois mise en référence sur la traverse 2, chaque pièce support 3, 4 s'étend d'un bord d'extrémité de ladite traverse 2 vers le milieu de celle-ci,
- Une étape de fixation des deux pièces support 3, 4 à la traverse 2, cette étape étant préférentiellement réalisée au moyen de vis passant par les ouvertures 12, 13, 14 de la face supérieure 8 de chaque pièce-support 3, 4 et par les trous 19 de la face inférieure 30 de la traverse,
- Une étape de fixation du bouclier 1 à la traverse 2 par l'intermédiaire des deux pièces support 3, 4 préalablement arrimées à la traverse 2. Cette étape est préférentiellement réalisée au moyen de vis traversant le bouclier 1 et les pièces support 3, 4

## Revendications

1. Procédé de fixation d'un bouclier arrière (1) sur une traverse arrière (2) d'un véhicule au moyen de deux pièces support (3, 4), **caractérisé en ce qu'**il comprend les étapes suivantes :
- Une étape de mise en référence de chaque pièce support (3, 4) sur la traverse (2), au moyen de l'insertion d'une patte de fixation repliée (18) de la pièce support (3, 4) autour d'un bord d'extrémité de la traverse (2), puis d'un pivotement de ladite pièce (3, 4) autour de la patte repliée (18) jusqu'à ce qu'au moins un pion (15) de la pièce support (3, 4) vienne se loger dans au moins un orifice (20) de la traverse (2),
- Une étape de fixation des deux pièces support (3, 4) à la traverse (2),
- Une étape de fixation du bouclier (1) à la traverse (2) par l'intermédiaire des deux pièces support (3, 4).

2. Procédé de fixation selon la revendication 1, **caractérisé en ce que** la traverse arrière (2) s'étend selon un axe transversal Y du véhicule et présente deux extrémités (5, 6) le long dudit axe, et **en ce que** la patte de fixation repliée (18) est située à une extrémité de la pièce support (3, 4), de manière à ce que lors de l'étape de mise en référence ladite patte repliée (18) est insérée autour du bord d'extrémité de la traverse (2) en plaçant ladite pièce support (3, 4) sous la traverse (2).

3. Procédé de fixation selon la revendication 2, **caractérisé en ce que** l'orifice (20) est placé sur une face inférieure (30) de la traverse (2) et le pion (15) est implanté sur une face supérieure (8) de la pièce support (3, 4), et **en ce que** le pivotement de la pièce support (3, 4) lors de l'étape de mise en référence s'effectue vers le haut dans un plan YZ transversal et vertical du véhicule.

4. Procédé de fixation selon l'une quelconque des revendications 1 à 3, **caractérisé en ce que** lors de l'étape de mise en référence, le pion (15) pénètre dans l'orifice (20) avec un certain effort.

5. Procédé de fixation selon la revendication 4, **caractérisé en ce que** le pion (15) et l'orifice (20) présentent des caractéristiques structurelles permettant audit pion (15) d'être bloqué dans ledit orifice (20) lors de l'étape de mise en référence, permettant à la pièce support (3, 4) de demeurer au contact de la traverse (2).

6. Procédé de fixation selon l'une quelconque des revendications 1 à 5, **caractérisé en ce que** chaque pièce support (3, 4) après avoir été correctement mise en référence sur la traverse (2) est fixée à celle-ci au moyen de vis.

7. Véhicule comprenant une traverse arrière (2), deux pièces support (3, 4) et un bouclier arrière (1), **caractérisé en ce que** le bouclier arrière (1) est fixé à la traverse arrière (2) au moyen d'un procédé conforme à l'une quelconque des revendications 1 à 6.

8. Pièce support (3, 4) pour la fixation d'un bouclier arrière (1) sur une traverse arrière (2) d'un véhicule à partir d'un procédé conforme à l'une quelconque des revendications 1 à 6, **caractérisée en ce qu'**elle comprend un corps allongé (7) présentant une face supérieure (8) allongée, et deux extensions (9, 11) perpendiculaires audit corps (7), et **en ce qu'**elle comprend une patte repliée (18) située à une extrémité de la face supérieure (8) considérée le long de son axe longitudinal, et un pion (15) implanté dans ladite face supérieure (8).

9. Pièce support selon la revendication 8, **caractérisée en ce que** la face supérieure (8) comprend au moins deux trous (12, 13, 14) placés le long de ladite face supérieure (8) et destinés à recevoir une vis pour la fixation de ladite pièce (3, 4) sur une traverse arrière (2) de véhicule.

10. Pièce support selon l'une quelconque des revendications 8 ou 9, **caractérisé en ce que** le pion (15) a une forme tronconique et émerge de la face supérieure (8) de sorte que sa section transversale soit maximale du côté de la paroi supérieure (8) et diminue progressivement en s'éloignant de ladite paroi (8).

## Patentansprüche

1. Verfahren zur Befestigung eines hinteren Stoßfängers (1) an einem hinteren Querträger (2) eines Fahrzeugs mittels zweier Halteteile (3, 4), **dadurch gekennzeichnet, dass** es die folgenden Schritte umfasst:
- einen Schritt der Ausrichtung jedes Halteteils (3, 4) zu dem Querträger (2) durch die Einführung einer umgebogenen Befestigungslasche (18) des Halteteils (3, 4) um einen Endrand des Querträgers (2) herum und ein anschließendes Schwenken des Teils (3, 4) um die umgebogene Lasche (18), bis wenigstens ein Zapfen (15) des Halteteils (3, 4) in wenigstens einer Öffnung (20) des Querträgers (2) aufgenommen wird,
- einen Schritt der Befestigung der zwei Halteteile (3, 4) am Querträger (2),
- einen Schritt der Befestigung des Stoßfängers (1) am Querträger (2) durch die zwei Halteteile (3, 4).

2. Verfahren zur Befestigung nach Anspruch 1, **dadurch gekennzeichnet, dass** sich der hintere Querträger (2) entlang einer Querachse Y des Fahrzeugs erstreckt und zwei Enden (5, 6) entlang dieser Achse aufweist, und dadurch, dass sich die umgebogene Befestigungslasche (18) an einem Ende des Halteteils (3, 4) befindet, so dass im Schritt der Ausrichtung die umgebogene Lasche (18) um den Endrand des Querträgers (2) herum eingeführt wird, indem das Halteteil (3, 4) unter dem Querträger (2) angeordnet wird.

3. Verfahren zur Befestigung nach Anspruch 2, **dadurch gekennzeichnet, dass** die Öffnung (20) an einer Unterseite (30) des Querträgers (2) angeordnet ist und der Zapfen (15) auf einer Oberseite (8) des Halteteils (3, 4) angebracht ist, und dadurch, dass das Schwenken des Halteteils (3, 4) im Schritt der Ausrichtung in einer quer und vertikal verlaufenden Ebene YZ des Fahrzeugs nach oben erfolgt.

4. Verfahren zur Befestigung nach einem der Ansprüche 1 bis 3, **dadurch gekennzeichnet, dass** im Schritt der Ausrichtung der Zapfen (15) mit einer gewissen Kraft in die Öffnung (20) eindringt.

5. Verfahren zur Befestigung nach Anspruch 4, **dadurch gekennzeichnet, dass** der Zapfen (15) und die Öffnung (20) Strukturmerkmale aufweisen, welche ermöglichen, dass der Zapfen (15) im Schritt der Ausrichtung in der Öffnung (20) blockiert wird, was ermöglicht, dass das Halteteil (3, 4) mit dem Querträger (2) in Kontakt bleibt.

6. Verfahren zur Befestigung nach einem der Ansprüche 1 bis 5, **dadurch gekennzeichnet, dass** jedes Halteteil (3, 4), nachdem es korrekt zu dem Querträger (2) ausgerichtet worden ist, mittels Schrauben an diesem befestigt wird.

7. Fahrzeug, welches einen hinteren Querträger (2), zwei Halteteile (3, 4) und einen hinteren Stoßfänger (1) umfasst, **dadurch gekennzeichnet, dass** der hintere Stoßfänger (1) an dem hinteren Querträger (2) mittels eines Verfahrens gemäß einem der Ansprüche 1 bis 6 befestigt ist.

8. Halteteil (3, 4) zur Befestigung eines hinteren Stoßfängers (1) an einem hinteren Querträger (2) eines Fahrzeugs nach einem Verfahren gemäß einem der Ansprüche 1 bis 6, **dadurch gekennzeichnet, dass** es einen lang gestreckten Körper (7), der eine lang gestreckte Oberseite (8) aufweist, und zwei zu dem Körper (7) senkrechte Fortsätze (9, 11) umfasst, und dadurch, dass es eine umgebogene Lasche (18), die sich, entlang seiner Längsachse gesehen, an einem Ende der Oberseite (8) befindet, und einen in der Oberseite (8) angebrachten Zapfen (15) umfasst.

9. Halteteil nach Anspruch 8, **dadurch gekennzeichnet, dass** die Oberseite (8) wenigstens zwei Löcher (12, 13, 14) umfasst, die entlang der Oberseite (8) angeordnet sind und dazu bestimmt sind, eine Schraube zur Befestigung des Teils (3, 4) an einem hinteren Querträger (2) des Fahrzeugs aufzunehmen.

10. Halteteil nach einem der Ansprüche 8 oder 9, **dadurch gekennzeichnet, dass** der Zapfen (15) eine kegelstumpfförmige Gestalt aufweist und aus der Oberseite (8) herausragt, so dass sein Querschnitt auf der Seite der oberen Wand (8) maximal ist und sich mit zunehmender Entfernung von der Wand (8) allmählich verkleinert.

## Claims

1. Method for fixing a rear bumper (1) to a rear crossmember (2) of a vehicle by means of two support components (3, 4), **characterized in that** it comprises the following steps:
- a step of referencing each support component (3, 4) on the crossmember (2), by inserting a bent-over fixing tab (18) of the support component (3, 4) around an end edge of the crossmember (2) and then pivoting said component (3, 4) about the bent-over tab (18) until at least one peg (15) of the support component (3, 4) becomes lodged in at least one orifice (20) of the crossmember (2),
- a step of fixing the two support components (3, 4) to the crossmember (2),
- a step of fixing the bumper (1) to the crossmember (2) via the two support components (3, 4).

2. Method of fixing according to Claim 1, **characterized in that** the rear crossmember (2) extends along a transverse axis Y of the vehicle and has two ends (5, 6) along said axis, and **in that** the bent-over fixing tab (18) is situated at one end of the support component (3, 4) so that, during the referencing step, said bent-over tab (18) is inserted around the end edge of the crossmember (2) by placing said support component (3, 4) under the crossmember (2).

3. Method for fixing according to Claim 2, **characterized in that** the orifice (20) is placed on a lower face (30) of the crossmember (2) and the peg (15) is installed on an upper face (8) of the support component (3, 4), and **in that** the pivoting of the support component (3, 4) during the referencing step is performed upwards in a transverse and vertical plane YZ of the vehicle.

4. Method for fixing according to any one of Claims 1 to 3, **characterized in that**, during the referencing step, the peg (15) enters the orifice (20) with a certain amount of effort.

5. Method for fixing according to Claim 4, **characterized in that** the peg (15) and the orifice (20) have structural features that allow said peg (15) to be immobilized in said orifice (20) during the referencing step, allowing the support component (3, 4) to remain in contact with the crossmember (2) .

6. Method for fixing according to any one of Claims 1 to 5, **characterized in that** each support component (3, 4), after having been correctly referenced on the crossmember (2), is fixed to the latter by means of screws.

7. Vehicle comprising a rear crossmember (2), two support components (3, 4) and a rear bumper (1), **characterized in that** the rear bumper (1) is fixed to the rear crossmember (2) by means of a method according to any one of Claims 1 to 6.

8. Support component (3, 4) for fixing a rear bumper (1) to a rear crossmember (2) of a vehicle using a method according to any one of Claims 1 to 6, **characterized in that** it comprises an elongate body (7) having an elongate upper face (8) and two extensions (9, 11) perpendicular to said body (7), and **in that** it comprises a bent-over tab (18) situated at one end of the upper face (8) considered along the longitudinal axis thereof, and a peg (15) installed in said upper face (8).

9. Support component according to Claim 8, **characterized in that** the upper face (8) comprises at least two holes (12, 13, 14) placed along said upper face (8) and intended to accept a screw for fixing said component (3, 4) to a vehicle rear crossmember (2).

10. Support component according to either one of Claims 8 and 9, **characterized in that** the peg (15) is of frustoconical shape and emerges from the upper face (8) in such a way that its cross section is at a maximum at the end corresponding to the upper wall (8) and decreases progressively with increasing distance away from said wall (8).
